# EUROPEAN PATENT SPECIFICATION

(11) **EP 0 360 426 B1**
(45) Date of publication and mention of the grant of the patent: **31.03.1993**
(21) Application number: 89308599.3
(22) Date of filing: 24.08.1989
(51) Int. Cl.: C04B 35/00, H01T 13/40

(54) **A method of moulding ceramic insulators for use in spark plugs**
Verfahren zum Formen keramischer Isolatoren für die Verwendung in Zündkerzen
Méthode de moulage des isolateurs en céramique pour l'utilisation dans des bougies d'allumage

(30) Priority: 25.08.1988 JP 209450/88; 09.12.1988 JP 312186/88
(43) Date of publication of application: 28.03.1990
(73) Proprietor: NGK SPARK PLUG CO., LTD, Nagoya-shi (JP)
(72) Inventor: Oshima, Takafumi, Mizuho-ku Nagoya-shi (JP); Kozuka, Kazuhiko, Mizuho-ku Nagoya-shi (JP); Yamada, Shigeyasu, Mizuho-ku Nagoya-shi (JP)
(74) Representative: Senior, Alan Murray

(56) References cited:
- US-A- 4 224 554

## Description

The invention relates to a method of moulding ceramic insulators for spark plugs for use in internal combustion engines, and particularly concerns an improved press for moulding granular or powdered materials by compaction.

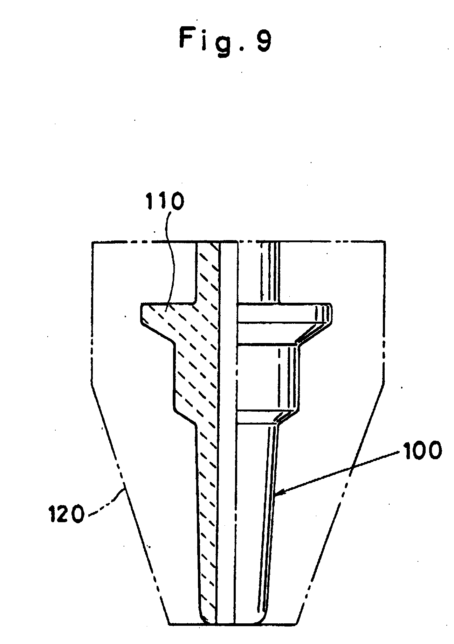

In a prior art method of moulding a ceramic insulator 100, a binder agent and an auxiliary sintering agent are added to a ceramic powder to form a spray powder 110 as seen in Figure 9. The spray powder 110 thus formed, is compacted into a bullet shaped configuration 120 by pressing. The compacted ceramic is then shaped by honing and sintered.

However, the prior art has the following disadvantages:
(A) The high density outer layer of the ceramic insulator is removed by shaping, thus deteriorating the granular spray, impeding the reduction in the number of flow holes and resulting in a lower perforation voltage.
(B) The shaping produces a large amount of non-reusable chips of insulator which is expensive.
(C) The method allows only rotationally symmetric forms, thus restricting the options open to the designer.

Therefore, it is an aim of the present invention to provide a method of moulding a ceramic insulator for a spark plug which results in an insulator with a relatively high perforation voltage at minimum cost and with minimum design constraints.

According to the present invention, there is provided a method of making a ceramic insulator for use in a spark plug structure, said method comprising the steps of: making a powder mix from a ceramic powder, an organic binder and an auxiliary sintering agent; forcing the powder into a mould and pressing the mould whereby the powder is compacted and shaped; and sintering the pressed ceramic.

With the present invention, cutting of the ceramic insulator when shaping is no longer necessary. This enables retention of the outer layer of the ceramic insulator lowering the number of blow holes so as to produce a high density insulator with a high perforation voltage.

No waste cutting chips are produced reducing the number of manufacturing processes and contributing to cost reduction.

The moulding method of the present invention can produce non-rotationally symmetric bodies as well as symmetric bodies, allowing the designer more freedom.

Preferably, the method of the present invention is used to make the front half of a ceramic insulator from aluminium nitride (AlN), the rear half is made of alumina (Al₂O₃) and the two pieces are bonded at their respective ends by a plug and socket.

This needs the minimum quantity of expensive aluminium nitride (AlN) leading to cost-saving, and thermal shock resistance.

The joint allows one to strengthen the bond between the front and rear half pieces by compression force and transverse direction stress when the ceramic insulator reaches a high temperature.

The present invention will be further explained hereinafter with reference to the following description of exemplary embodiments and the accompanying drawings, in which:
Figure 1 is a schematic view of the principle of manufacture by press forming a spark plug according to a first embodiment of the invention;
Figure 2 is a partially sectioned view of an insulator formed by a method according to the invention;
Figure 3 is a partially sectioned view of a spark plug including an insulator formed by a method according to the invention;
Figure 4 is a perspective view of a front half piece of an insulator formed according to a second embodiment of the invention;
Figure 5 is a partially sectioned view of an insulator formed according to a third embodiment of the invention;

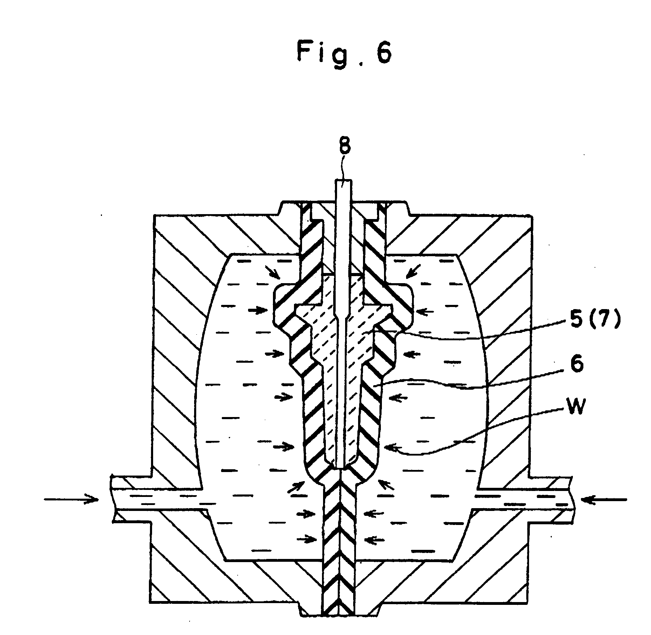

Figure 6 is a cross-sectional side view of a press mould used in the second embodiment of the invention;
Figures 7 and 8 are cross-sectional views of sides of a press mould used in a third embodiment of the invention; and
Figure 9 is a view of a prior art insulator from a spark plug showing its method of manufacture.

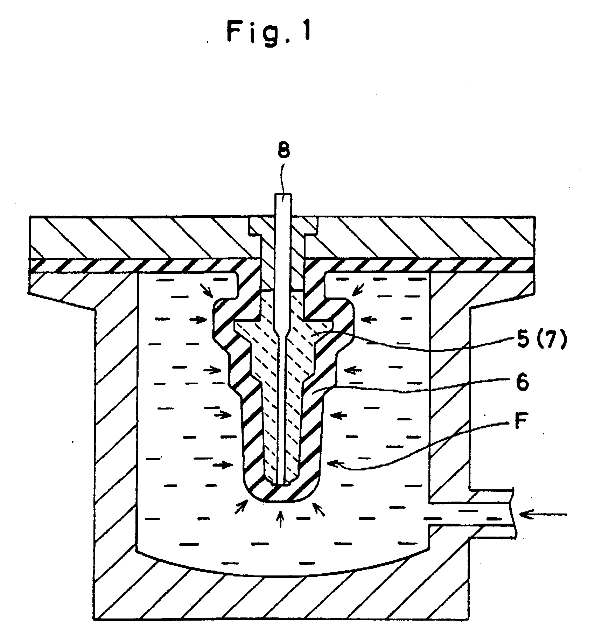

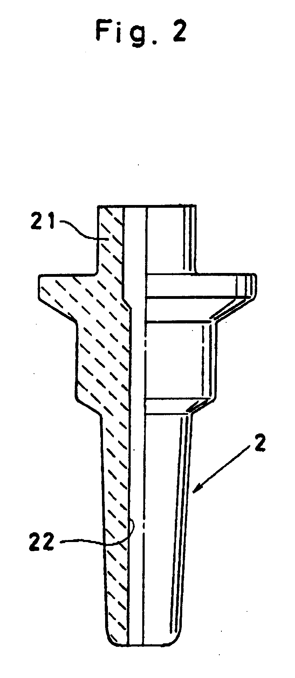

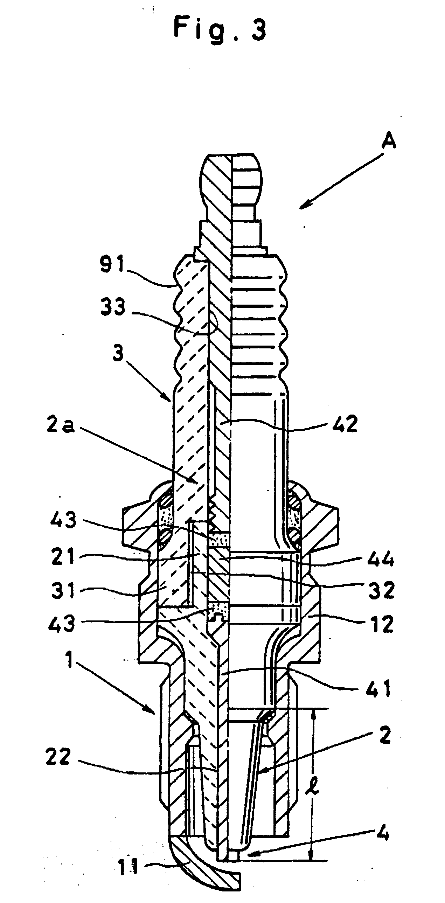

Referring to Figures 1 to 3, a spark plug (A) according to the present invention, has a cylindrical metallic shell 1 and a tubular insulator 2a consisting of a front half piece 2 and a rear half piece 3.

The front half piece 2 has a projection 21 at the rear end, while the rear half piece 3 has a recess 31. The front and rear half pieces 2,3 are bonded by jointing the projection 21 to the recess 31 by a glass sealant 32 of high melting point in the manner of a plug and socket joint. Into the insulator 2a, a centre electrode 4 is concentrically placed to form a spark plug gap with a ground electrode 11 depending from the metallic shell 1 which is made of low carbide steel. The rear half piece 3 is made of sintered alumina (Al₂O₃) body. The plug and socket joint portion is located at the barrel 12 of the metallic shell 1. The centre electrode 4 is placed at axial bores 22,33 each provided with an insulator 2a, and a firing tip 41 and a terminal tip 42 are integrally sealed through a resistor 44 and an electrically conductive glass 43.

The front half piece 2 of the insulator 2a is made as follows:
(a) Low polymerised polyvinylalcohol-based binder, and yttrium oxide (Y₂O₃) are added to aluminium nitride (AlN) powder which has 0.6 to 0.7 microns in spherical diameter to form secondary particles of 50 to 70 microns in average spherical diameter (referred to as spray powder 5 hereinafter).
(b) The spray powder 5 is placed into a rubber mould 6 which is made in accordance with a shape of the front half piece 2, and pressed by means of oil pressure F for 10 to 20 seconds under the pressure of 2.1 tonne/cm² at normal temperature to form a compaction body 7 (see in Figure 1). It is noted that a bar 8 is used for the purpose of providing the bore 22. The rubber mould 6 when empty has a capacity generally 120% of the volume of the spray powder 5.
(c) The compaction body 7 is taken out of the mould 6 by elastic deformation of the rubber mould 6 and sintered at a temperature of 1600 to 2000°C under nitrogen gas atmosphere to form the ceramic insulator 2a.

In the meanwhile, the rear half piece 3 is made in a manner similar to that of the front half piece 2, but the sintering can be done in air and/or at atmospheric pressure, then the front and rear half pieces 2,3 are bonded to each other in the same manner as mentioned above.

Experiments were carried out by using the spark plug (A) and a prior art counterpart mounted on a 1000cc turbocharged engine.

It is found that the spark plug (A) according to the invention, has a 10 to 20% greater perforation voltage.

Further, it is found that the processes contribute to cost-saving and reduction of manufacturing processes as compared to the prior art in which a number of non-reusable cutting chaps were produced.

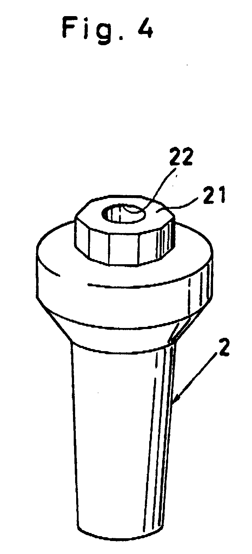

Now, referring to Figure 4, a second embodiment of the invention is described hereinafter.

In this second embodiment, the projection 21 of the front half piece 2 is polygonal, which strengthens the plug and socket joint.

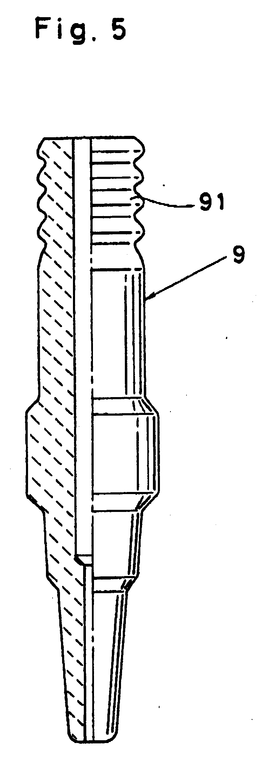

Referring to Figure 5, a third embodiment of the invention is described below.

According to the third embodiment of the invention, an insulator 9 including a rear half piece having an upper corrugation 91 is made of aluminium nitride (AlN), silicon nitride (Si₃N₄) or alumina (Al₂O₃).

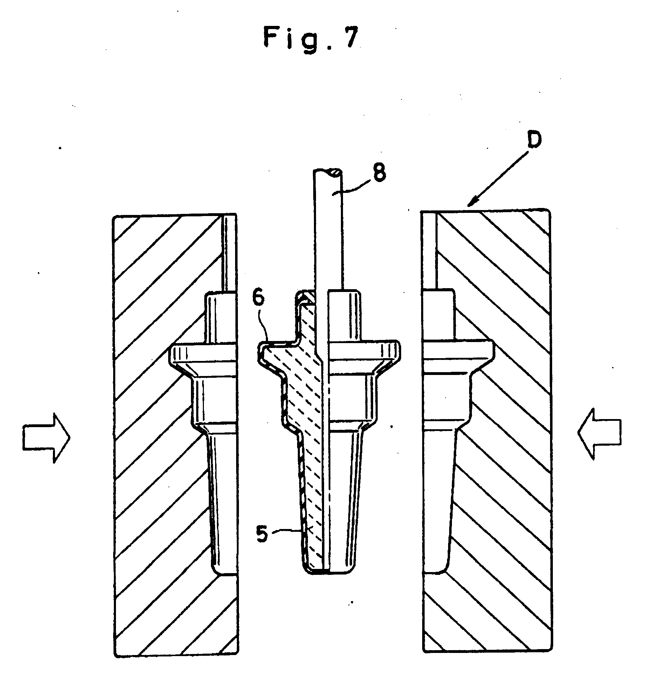

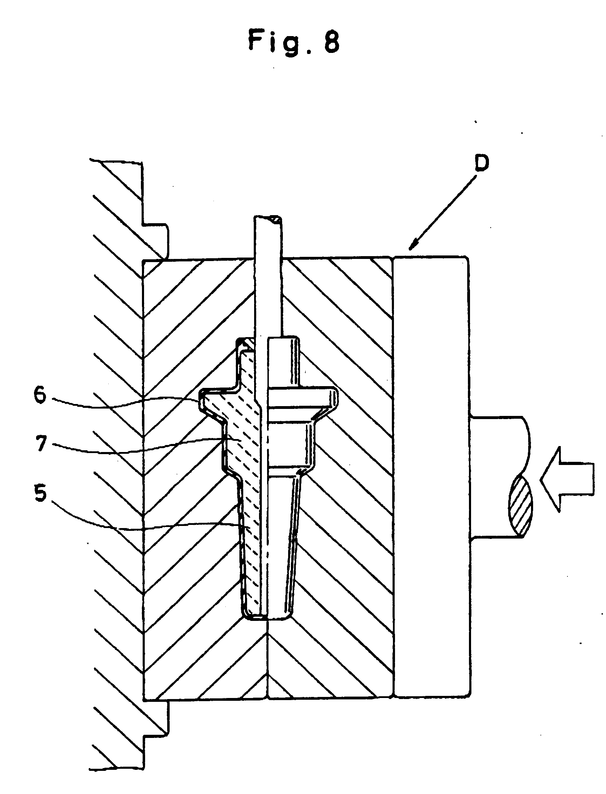

As modifications, press machine for making press compaction may be of a metallic device (D) shown in Figure 7 and 8. Instead of oil pressure, hydraulic pressure W may be used.

In the invention, aluminium nitride (AlN) powder with particles 0.2 to 10 microns in spherical diameter can be used to which elements such as Fe, Si, O and the like are added. The percentage by weight of those elements should be limited to less than 1%, because the presence of these elements tends to reduce the thermal conductivity below 60 W/mk.

As a sintering agent any suitable combination of the following may be added:
(i) Oxides of alkali earth metal such as CaO, BaO, SrO or the like.
(ii) Nitrates such as Ca(NO₃)₂), or carbonates such as CaCO₃, BaCO₃ and SrCO₃ or the like.
(iii) Rare earth metals such as Y₂O₃, La₂O₃, CeO₂, PrO₂, Nd₂O₃, Sm₂O₃, Gd₂O₃, Dy₂O₃ or the like.
(iv) Rare earth fluorides such as YF₃ or the like.

A preignition resistance test is carried out with a 1600cc 4-cylinder DOHC engine running at 5500 rpm x 4/4, and with the ignition advancement angle made variable. The result is shown in Table 1 which apparently shows that preignition resistance has improved. Where denotation (1) indicates the length dimension corresponding to that in which the insulator is projected from a front end of the metallic shell.

A fouling resistance test is carried out using a 1600cc 4-cylinder DOHC engine. Each cycle is determined by a cyclic operation of idling (90 sec) - low velocity (35 Km/h 120 sec) at a temperature of -10°C. The result is as seen in Table 2 which shows that the fouling resistance increases with increasing length (1).

An endurance test is carried out with 2000cc 6-cylinder engine used for 100 hours at full throttle (corresponding to the distance of 20 000 Km). Transformation of (AlN) into alumina (Al₂O₃) is found only in an outer layer (10 to 20 microns) with no deterioration of heat resistance.

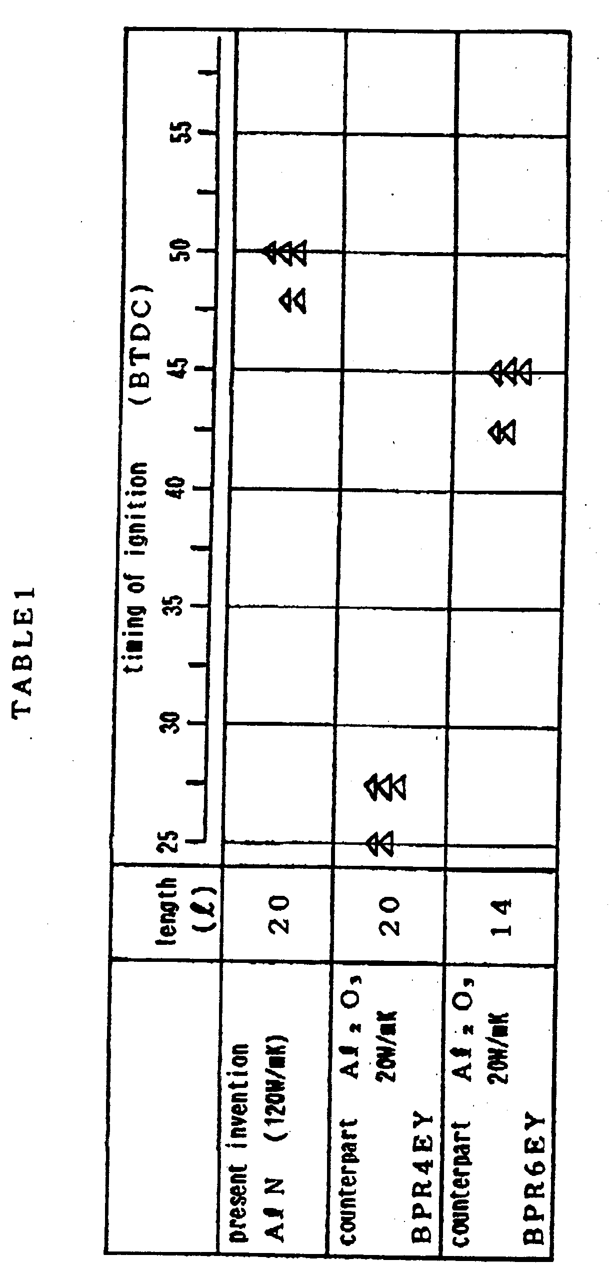

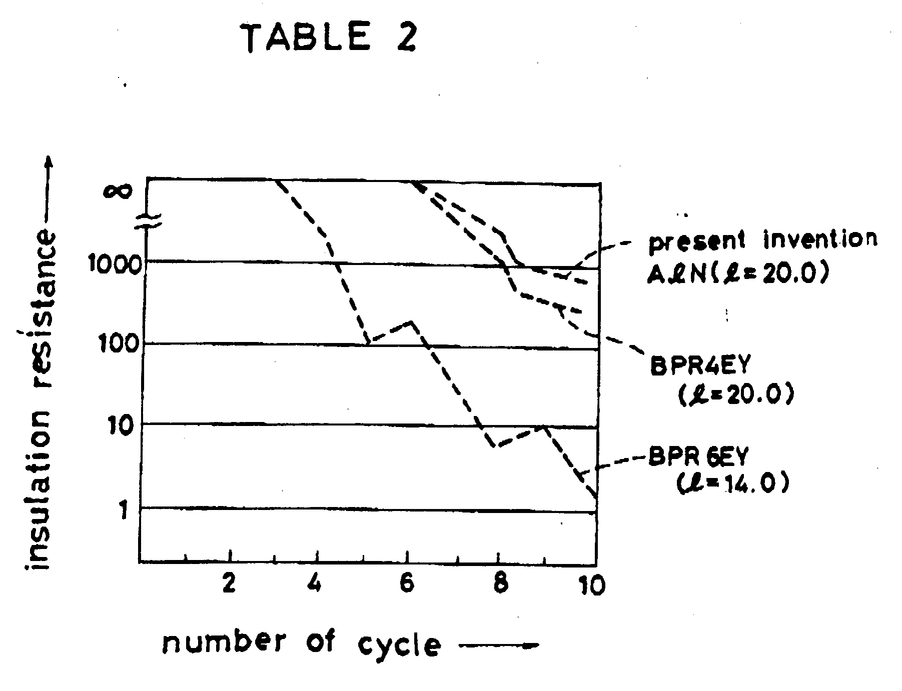

## Claims

1. A method of making a ceramic insulator for use in a spark plug structure, said method comprising the steps of: making a powder mix from a ceramic powder, an organic binder and an auxiliary sintering agent; forcing the powder into a mould and pressing the mould whereby the powder is compacted and shaped; and sintering the pressed ceramic.

2. A method of making a ceramic insulator for use in a spark plug structure including a metallic shell, the ceramic insulator being placed into the shell, and a centre electrode placed into the insulator, the ceramic insulator having a thermal conductivity of more than 60 W/mk; said method comprising the steps of making a powder mix from a ceramic powder, an organic binder and an auxiliary sintering agent; forcing the powder mix into a mould and pressing the mould whereby the powder is compacted and shaped; and sintering the pressed ceramic.

3. A method according to claim 1 or 2, wherein the average diameter of the particles of the powder is from 20 to 100 µm (microns).

4. A method according to claim 1, 2 or 3, wherein the step of sintering the pressed ceramic is performed at normal pressure and at a temperature of from 1600 to 2000°C.

5. A method according to claim 1, 2, 3 or 4, wherein said ceramic powder is at least one of AlN, Si₃N₄ or Al₂O₃.

6. A method according to any one of claims 1 to 5, wherein the ceramic powder includes aluminium nitride (AlN) particles of 0.2 to 10 µm (microns) average spherical diameter to which at least one of oxides, nitrates, carbonates and fluorides of alkaline earths, alkali metals and rare earths is added.

7. A method according to any one of the preceding claims, wherein the mould is flexible.

8. A method according to any one of claims 1 to 7, wherein the powder mix is pressed by applying pressure via a fluid or a die.

9. A spark plug including a ceramic insulator having a front half piece made of aluminium nitride (AlN) according to the method of any preceding claim and a rear half piece made of alumina (Al₂O₃), the two pieces being bonded at their respective ends by a plug and socket type joint.

## Patentansprüche

1. Verfahren zur Herstellung eines keramischen Isolators zur Verwendung in einem Zündkerzenaufbau, wobei das Verfahren die folgenden Schritte umfaßt: Herstellen eines Pulvergemischs aus einem Keramikpulver, einem organischen Bindemittel und einem Zusatzsintermittel, Hineindrücken des Pulvers in eine Form und Pressen der Form, wodurch das Pulver verdichtet und geformt wird, und Sintern des verpreßten Keramikmaterials.

2. Verfahren zur Herstellung eines keramischen Isolators zur Verwendung in einem Zündkerzenaufbau, mit einer Metallummantelung, wobei der keramische Isolator in diese Ummantelung eingebracht ist, und mit einer Mittelelektrode, die in dem keramischen Isolator untergebracht ist, wobei der keramische Isolator eine Wäremeleitfähigkeit von mehr als 60W/mK aufweist, und wobei das Verfahren die folgenden Schritte umfaßt: Herstellen eines Pulvergemisches aus einem Keramikpulver, einem organischen Bindemittel und einem Zusatzsintermittel, Hineindrücken des Pulvergemisches in eine Form und Pressen der Form, wodurch das Pulver verdichtet und geformt wird, und Sintern des verpreßten Keramikmaterials.

3. Verfahren nach Anspruch 1 oder 2, bei dem der durchschnittliche Durchmesser der Pulverteilchen zwischen 20 und 100 µm (Mikrometer) liegt.

4. Verfahren nach Anspruch 1, 2 oder 3, bei dem der Schritt des Sinterns des verpreßten Keramikmaterials unter Normaldruck und bei einer Temperatur von 1600 bis 2000°C durchgeführt wird.

5. Verfahren nach Anspruch 1, 2, 3 oder 4, bei dem das Keramikpulver zumindest eines von AlN, Si₃N₄ oder Al₂O₃ ist.

6. Verfahren nach einem der Ansprüche 1 bis 5, bei dem das Keramikpulver Teilchen aus Aluminiumnitrid (AlN) mit einem durchschnittlichen sphärischen Durchmesser von 0,2 bis 10 µm (Mikrometer) umfaßt, zu denen zumindest eines von den Oxiden, Nitraten, Karbonaten und Fluoriden von Erdalkalien, Alkalimetallen und seltenen Erden hinzugefügt wird.

7. Verfahren nach einem der vorhergehenden Ansprüche, bei dem die Form flexibel ist.

8. Verfahren nach einem der Ansprüche 1 bis 7, bei dem das Pulvergemisch durch Beaufschlagen mit Druck über ein Fluid oder einen Stempel verpreßt wird.

9. Zündkerze mit einem keramischen Isolator, dessen vordere Hälfte aus Aluminiumnitrid (AlN) nach dem Verfahren gemäß einem der vorhergehenden Ansprüche hergestellt ist, und dessen hintere Hälfte aus Aluminiumoxid (Al₂O₃) hergestellt ist, wobei die beiden Teile an ihren jeweiligen Enden durch eine Verbindung der Steckverbindungsart miteinander verbunden sind.

## Revendications

1. Procédé de fabrication d'un isolateur en céramique pour une utilisation dans une structure de bougie d'allumage, ledit procédé comportant les étapes consistant à : préparer un mélange de poudre à partir d'une poudre de céramique, d'un liant organique et d'un agent de frittage auxiliaire; pousser la poudre dans un moule et pressuriser le moule, de manière à tasser la poudre et à la mettre en forme; et fritter la céramique comprimée.

2. Procédé de fabrication d'un isolateur en céramique pour une utilisation de structure de bougie d'allumage comprenant une coquille métallique, l'isolateur en céramique étant placé dans la coquille, et une électrode centrale disposée dans l'isolateur, l'isolateur en céramique possédant une conductivité thermique supérieure à 60 W/mk; ledit procédé comportant les étapes consistant à préparer un mélange de poudre à partir d'une poudre de céramique, d'un liant organique et d'un agent de frittage auxiliaire; pousser le mélange de poudre dans un moule et pressuriser le moule,de sorte que la poudre soit tassée et mise en forme; et fritter la céramique comprimée.

3. Procédé selon la revendication 1 ou 2, dans lequel le diamètre moyen des particules de la poudre est compris entre 20 et 100 µm (microns).

4. Procédé selon la revendication 1,2 ou 3 dans lequel l'étape de frittage de la céramique comprimée est effectuée à pression normale et à une température comprise entre 1600 et 2000°C.

5. Procédé selon la revendication 1,2,3 ou 4, dans lequel ladite poudre de céramique est une poudre de l'un au moins de AlN, Si₃N₄ et Al₂O₃.

6. Procédé selon l'une quelconque des revendications 1 à 5, dans lequel la poudre de céramique comprend des particules de nitride d'aluminium (AlN) de diamètre moyen de sphère de 0,2 à 10 µm (microns) auxquelles est ajouté l'un au moins parmi des oxydes, des nitrates, des carbonates et des fluorures de terres alcalines, de métaux alcalins et de terres rares.

7. Procédé selon l'une quelconque des revendications précédentes, dans lequel le moule est flexible.

8. Procédé selon l'une quelconque des revendications 1 à 7, dans lequel le mélange de poudre est comprimé en appliquant une pression par l'intermédiaire d'un fluide ou d'un poinçon.

9. Bougie d'allumage comprenant un isolateur en céramique possédant une moitié antérieure réalisée en nitride d'aluminium (AlN) selon le procédé de l'une quelconque des revendications précédentes et une moitié postérieure réalisée en alumine (Al₂O₃), les deux moitiés étant réunies à leurs extrémités respectives jar un assemblage à fiche et douille.
